# EUROPÄISCHE PATENTSCHRIFT

(11) **EP 0 377 132 B1**
(45) Veröffentlichungstag und Bekanntmachung des Hinweises auf die Patenterteilung: **08.06.1994**
(21) Anmeldenummer: 89122582.3
(22) Anmeldetag: 07.12.1989
(51) Int. Cl.: C01B 21/068, C04B 35/58

(54) **Verfahren zur Herstellung von Siliziumnitrid**
Process for the production of silicon nitride
Procédé pour la production de nitrure de silicium

(30) Priorität: 08.12.1988 DE 3841311
(43) Veröffentlichungstag der Anmeldung: 11.07.1990
(73) Patentinhaber: SKW Trostberg Aktiengesellschaft, 83308 Trostberg (DE)
(72) Erfinder: Hintermayer, Jochen, D-8223 Trostberg (DE); Graf, Ernst, D-8223 Trostberg (DE); Gmöhling, Werner, Dr., D-8221 Hufschlag (DE); Schroll, Georg, D-8221 Palling (DE); Kobler, Wolfgang, D-8223 Trostberg (DE)
(74) Vertreter: Huber, Bernhard, Dipl.-Chem.

(56) Entgegenhaltungen:
- EP-A- 0 186 497
- CHEMICAL ABSTRACTS, vol. 108, no. 22, Mai 1988 Columbus, Ohio, USA Yoneda et al.:"Apparatus for producing high-purity nonoxide ceramic powder." Seite 305;rechte Spalte; ref. no. 191553P
- PATENT ABSTRACTS OF JAPAN vol. 11, no. 132 (C-417)(2579) 24 April 1987,& JP-A-61 266305 (ONODA CEMENT) 26 November 1986.
- CHEMICAL ABSTRACTS, vol. 88, no. 4, 23 Januar 1978 Columbus, Ohio, USA Matsubara et al.:"Nitrides" Seite 111; rechte Spalte; ref. no. 25028V
- PATENT ABSTRACTS OF JAPAN vol. 9, no. 192 (C-296)(1915) 8 August 1985,& JP-A-60 60909 (MITSUBISHI KINZOKU) 8 April 1985,
- PATENT ABSTRACTS OF JAPAN vol. 12, no. 446 (C-546)(3293) 24 November 1988,& JP-A-63 170203 (SHIN ETSU) 14 Juli 1988,
- PATENT ABSTRACTS OF JAPAN vol. 13, no. 494 (C-651)(3842) 8 November 1989,& JP-A-01 197307 (JAPAN METALS & CHEM) 9 August 1989,

## Beschreibung

Gegenstand der Erfindung ist ein Verfahren zur Herstellung von Siliciumnitrid sowie ein nach dem Verfahren erhaltenes Produkt.

Siliciumnitrid gewinnt steigendes Interesse als vielseitig einsetzbarer keramischer Werkstoff mit hoher Temperaturbeständigkeit. Aus vielen Einsatzbereichen hat es Metalle oder spezielle Metallegierungen bereits verdrängt. So findet dieser Werkstoff beispielsweise Verwendung bei Teilen, die starker Temperaturbelastung ausgesetzt sind und im Motorenbau eingesetzt werden. Auch im chemischen Apparatebau hat sich Siliciumnitrid inzwischen bewährt, da es sowohl eine hohe Temperaturwechselbeständigkeit besitzt als auch überaus widerstandsfähig gegenüber dem Einfluß von Chemikalien ist. In der metallurgischen Industrie ist Siliciumnitrid ein unentbehrlicher Bestandteil von Gießrinnen, Pfannen, Abstichschnauzen u. a.

Die Eigenschaften der aus Siliciumnitrid geformten Gegenstände werden weitgehend von dessen Reinheit bestimmt.

Zur Herstellung solcher Gegenstände dient normalerweise ein Siliciumnitrid, das sowohl eine hohe Reinheit als auch einen hohen Anteil an α-Phase aufweist.

Es sind zahlreiche Verfahren bekannt, die, von unterschiedlichen Rohstoffen ausgehend, zu Siliciumnitrid führen. So wird beispielsweise in der EP-A 0 082 343 die Herstellung von Siliciumnitrid durch Reaktion von Siliciumdioxid in Gegenwart von Kohlenstoff mit Stickstoff bei Temperaturen von 1350 bis 1550°C beschrieben. Aus der EP-A 0 206 795 ist die Herstellung eines feinteiligen Siliciumnitrids mit einem hohen Anteil an α-Phase bekannt, wobei als Ausgangsstoffe SiO und Kohlenstoff sowie gegebenenfalls Siliciumpulver und/oder Siliciumnitrid dienen, die in einer Stickstoffatmosphäre von nicht unter 2 bar auf 1400 bis 1800°C erhitzt werden. Nachteilig bei diesen Verfahren sind die relativ hohen Anteile an Verunreinigungen, so daß zur Gewinnung eines einheitlichen Produktes weitere Reinigungsschritte notwendig sind.

In der EP-A 0 186 497 ist ein Herstellungsverfahren beschrieben, in der feinteiliges Silicium einer Korngröße ≦125 »m (150 mesh) mit Stickstoff, der gegebenenfalls mit einem Inertgas vermischt ist, bei 1200 bis 1400°C zur Reaktion gebracht wird. Um einen möglichst hohen Anteil an α-Siliciumnitrid zu erhalten, ist es erforderlich, die Temperatur der stark exothermen Reaktion im Bereich zwischen 1300 und 1400°C einzustellen (vgl. auch DE-OS 23 50 031, Seite 1, Absatz 3). Nach dem Verfahren der EP-A 0 186 497 wird die Einhaltung des Temperaturbereichs von 1200 bis 1400°C durch Reaktion bei Unterdruck erreicht, bis etwa 50 % des metallischen Siliciums reagiert haben. Nach diesem Verfahren läßt sich zwar ein α-Siliciumnitrid hoher Reinheit herstellen, doch erfordert die Herstellung eines bei Unterdruck und 1200 bis 1400°C betriebenen Reaktionsofens einen hohen technischen Aufwand. Darüber hinaus ist ein kontinuierlicher Betrieb eines Ofens bei unterschiedlichen Gasdrücken problematisch.

Es bestand daher die Aufgabe, ein Verfahren zur Herstellung von Siliciumnitrid zu schaffen, das problemlos auch in technischem Maßstab durchgeführt werden kann und wobei das erzeugte Produkt in poröser Form anfällt.

Es wurde nun gefunden, daß dieses Ziel gemäß dem Verfahren von Anspruch 1 erreicht wird.

Das auf diese Weise erhaltene Siliziumnitrid fällt in poröser Form an und weist die folgenden Eigenschaften auf:
a) Korngröße von 0,1 bis 20 mm
b) Stickstoffgehalt von 1 bis 39,5 Gew.-% N
c) Sauerstoffgehalt < 1 %
d) Verhältnis von α:β-Phase von 1:9 bis 9:1.
Üblicherweise weist dabei das Siliciumnitrid einen Stickstoffgehalt von 5 bis 25 Gew.-% und ein Verhältnis von α:β-Phase von 1:1 bis 9:1 auf.

Es hat sich nämlich überraschenderweise gezeigt, daß man die Schwierigkeiten bei der Herstellung von feinteiligem Siliciumnitridpulver umgehen kann, wenn man ein azotiertes poröses Granulat herstellt, welches ggf. in einer zweiten Reaktionsstufe völlig durchazotiert worden ist, und es auf die gewünschte Feinheit zerkleinert.

Das erfindungsgemäße Verfahren zur Herstellung des porösen Siliciumnitrids wird in der Weise ausgeführt, daß man in einer Reaktionsstufe feinteiliges Siliciumpulver einer Korngröße < 500 »m, bevorzugt < 20 »m, unter ständiger Umwälzung mit Stickstoff bei einer Temperatur von 1000 bis 1800° C und leichtem Überdruck von 1,01 -1,8 x 10⁵ Pa (1,01 bis 1,8 bar) bis zu einem Gehalt von 5 bis 25 Gew.-% behandelt und in einer 2.Stufe läßt man das teilweise azotierte Produkt bei einer Temperatur von 1100 bis 1600°C mit einem Gemisch aus Stickstoff und einem dem Produkt gegenüber inerten Gas bis zur Beendigung der Stickstoffaufnahme reagieren.

Die Azotierung des feinteiligen Siliciums mit Stickstoff erfolgt bevorzugt in einem von außen beheizten Drehrohr, so daß der Stickstoff durch die Bewegung des Produktes ständig eine neue Angriffsfläche am Siliciumteilchen erhält. Hierdurch wird gewährleistet, daß die Reaktionswärme infolge der exothermen Reaktion sofort an das Drehrohr abgegeben wird und somit eine Überhitzung des Reaktionsgutes vermieden wird. Auch die Verwendung eines Etagenofens mit eingebauten Umwälzorganen ist z. B. möglich. Durch Verwendung eines leichten Überdruckes in dieser Reaktionsstufe wird der Zutritt von Luftsauerstoff und damit die Bildung unerwünschter sauerstoffhaltiger Siliciumverbindungen ausgeschlossen.

Die Anwendung eines leichten Überdruckes stellt keine besonderen Dichtungsprobleme, selbst bei Temperaturen bis zu 1800°C in der Reaktionszone, dar. Die Durchlaufgeschwindigkeit des Siliciums bzw. wenn das Siliziumnitrid in zwei Reaktionsstufen durchazotiert werden soll, des teilweise azotierten Siliziums, durch, das Drehrohr wird so eingestellt, daß das Produkt am Ausgang einen Stickstoffgehalt von 1 bis 39,5 Gew.-% insbesondere von 5 bis 25 Gew.-% aufweist. Die hierfür nötige Zeit beträgt 2 bis 60 Minuten; im allgemeinen reichen 20 bis 45 Minuten aus, um die gewünschte Stickstoffaufnahme zu erreichen. Das entstandene, im wesentlichen kugelförmige, poröse Granulat besitzt eine Korngröße von 0,1 bis 20 mm und wird unter der gleichen Gasatmosphäre, wie sie im Drehrohr herrscht, auf Raumtemperatur abgekühlt. Durch Variation der Reaktionsbedingungen (z. B. Neigungswinkel und Umdrehungsgeschwindigkeit des Drehrohres) kann das Kornband des Granulates nach kleineren oder höheren Werten verschoben werden, womit sich auch dessen Porosität und Schüttgewicht in gewissen Grenzen ändert.

Entsprechend des erfindungsgemäßen Verfahrens wird das Silizium in einem ersten Schritt teilazotiert und danach das teilazotierte Granulat in einem gasdichten Ofen, vorzugsweise in einem sogenannten Kammerofen, bei 1100 bis 1600°C im Ruhebett fertig azotiert. Als Reaktionsmedium wird ein Gemisch von Stickstoff mit einem Edelgas oder mit Wasserstoff verwendet. Bevorzugt verwendet man Stickstoff im Gemisch mit Argon, wobei der Stickstoffanteil je nach Stickstoffgehalt des Ausgangsproduktes zwischen 30 bis 100 Vol.-% schwanken kann. Bei bereits relativ hohen Stickstoffgehalten des teilazotierten Produktes wird ein Gas mit höherem Stickstoffanteil verwendet als bei einem Ausgangsprodukt mit niedrigeren Stickstoffgehalten. Die Azotierung wird so lange fortgesetzt, bis der Stickstoffverbrauch pro Zeiteinheit praktisch auf Null abgesunken ist, wonach das Produkt voll durchreagiert ist und einen Stickstoffgehalt von bis zu 39,5 % erreicht hat. Das so erhaltene Siliciumnitrid-Granulat liegt in loser Schüttung vor; es ist nicht zusammengesintert und kann daher leicht auf die gewünschte Korngröße vermahlen werden.

Das poröse, im wesentlichen kugelförmige Granulat besitzt in der Regel ein Schüttgewicht von 0,5 bis 1,5 g/cm³, ein Porenvolumen von 30 bis 80 % und fällt in einer Körnung von 0,1 bis 20 mm, bevorzugt von 1 bis 10 mm, an. Das erfindungsgemäß hergestellte Siliciumnitrid benötigt keine weiteren Reinigungsschritte durch Auslaugen mit anorganischen Säuren. Voraussetzung für das Erreichen solch hochreinen Siliciumnitrids ist natürlich auch der Einsatz entsprechend reinen Siliciumpulvers. Dieses sollte einen Gehalt von mindestens 95 % Si aufweisen. Im allgemeinen genügt für die Herstellung von technisch einsatzfähigem Siliciumnitrid ein Ausgangsprodukt mit 97,5 % Si; für Spezialqualitäten wird aber auch ein Siliciummetall mit einem Reinheitsgrad von 99,8 % Si eingesetzt.

Entsprechend dem beabsichtigten Verwendungszweck kann das Verhältnis von α:β-Phase in dem Produkt durch entsprechende Steuerung der Reaktionstemperatur beeinflußt und im Verhältnis von 1 : 9 bis 9 : 1 variiert werden. Das in einem ersten Reaktionsschritt teilazotierte Produkt mit einem Stickstoffgehalt von 5 bis 25 Gew.-% weist überlicherweise ein α:β-Verhältnis von 1:1 bis 9:1 auf.

Das bei 1300 bis 1400°C gemäß der Erfindung hergestellte Siliciumnitrid besteht aus 87 % α- und 13 % β-Phase. Es eignet sich hervorragend zur Herstellung von Preßkörpern oder als Komponente ih hochtemperaturbeständigen Formteilen.

Für bestimmte Siliciumnitridqualitäten, z. B. solchen mit höheren Anteilen an β-Phase, kann die Azotiertemperatur in der zweiten Reaktionsstufe bis auf 1600°C gesteigert werden.

Die nachfolgenden Beispiele sollen die Erfindung weiter erläutern.

### Beispiel 1

Siliciumpulver einer Korngröße < 20 »m und einer Reinheit von 99,5 % Si wurde kontinuierlich einem von Stickstoff (99,99 % N) durchströmten Drehrohr aufgegeben. Dessen 400 mm lange Reaktionszone war auf 1350°C aufgeheizt. Die Reaktion führte bei einem Stickstoffdruck von 1,1 x 10⁵ Pa (1,1 bar) und einer Verweilzeit von 30 Minuten zu einem porösen, im wesentlichen kugelförmigen Granulat mit einer Korngröße zwischen 1 und 5 mm und einem Stickstoffgehalt von 10 bis 12 Gew.-%. Nach dem Überführen dieses Granulates in einen gasdichten Kammerofen mit Stickstoff/Argon-Atmosphäre, wobei das Stickstoff/Argon-Verhältnis entsprechend dem Reaktionsverlauf gesteuert wird (bei schnellem Reaktionsverlauf geringerer Stickstoffanteil im Gasgemisch als bei langsamem Reaktionsverlauf), wurde das Produkt innerhalb von 48 Stunden bei einer Temperatur von 1300 bis 1400°C vollständig azotiert. Der Stickstoffgehalt des erhaltenen Siliciumnitrids betrug 39,5 % (Theorie 39,96 % N). Die Granulatform war vollständig erhalten; die Porosität, bestimmt nach der Kapillardruckmethode (Quecksilberporosimetrie), betrug 60 %.

Durch 24-stündige Behandlung des erhaltenen Produktes mit 80°C warmer konzentrierter Salz- und Flußsäure trat weder eine Gewichts- noch Formveränderung ein.

Das erhaltene Siliciumnitrid wurde in einer Schwingscheiben-Mühle auf eine Korngröße < 20 »m vermahlen. Die Analyse des Produktes zeigte

| | |
|---|---|
| Si gesamt | 59,3 % |
| Si frei | 0,2 % |
| N₂ | 39,4 % |
| C | 0,04 % |
| Fe | 0,2 % |
| Al | 0,15 % |
| O₂ | 0,64 % |

Die Phasenanalyse zeigte einen Anteil von 85 % α-Si₃N₄; der restliche Anteil lag in der β-Modifikation vor.

### Beispiel 2

Siliciumpulver mit einer Korngröße < 45 »m und einem Gehalt von 95,5 % Si wurde kontinuierlich einem Drehofen aufgegeben, dessen 400 mm lange Reaktionszone auf einer Temperatur von 1380°C gehalten wurde. Die Umdrehungsgeschwindigkeit des Rohres betrug 3 Upm, der Stickstoffdruck 1,2 x 10⁵ Pa (1,2 bar). Die Verweilzeit des Produktes im insgesamt 1500 mm langen Drehrohr betrug 35 Minuten. Das teilweise azotierte Produkt wies einen Stickstoffgehalt von 9,2 % auf, fiel in einem Kornband von 1 bis 8 mm an und hatte eine Porosität von 40 % (bestimmt nach der Kapillardruckmethode mit Niederdruckporosimeter).

50 kg des erhaltenen teilazotierten Granulats wurden in lockerer Schüttung in einem auf 1600°C aufgeheizten Kammerofen in einer Stickstoff/Argon-Atmosphäre, wobei das Verhältnis von Stickstoff zu Argon zunächst 1 : 2 betrug, weiter azotiert. Innerhalb von 8 Stunden wurde die Temperatur des Ofens auf 1350°C abgesenkt und bei dieser Temperatur weitere 16 Stunden belassen, wobei der Stickstoffanteil im Reaktionsgas entsprechend dem Reaktionsfortschritt bis auf 100 % N₂ angehoben wurde. Nach dieser Zeit wurde dem Ofen ein Siliciumnitrid mit durchschnittlich 38,2 % N als lockeres poröses Granulat entnommen.

Die Phasenanalyse zeigte einen Gehalt an α-Modifikation von 55 %; 45 % des Produktes lagen als β-Phase vor.

### Beispiel 3

Siliciumpulver mit einer Korngröße < 20 »m und einem Siliciumgehalt von 99 % wurde kontinuierlich einem Drehrohrofen zugeführt. Im Drehrohr herrschte eine reine Stickstoffatmosphäre bei einem Stickstoffpartialdruck von 1,1x10⁵ Pa (1,1 bar) und einer Temperatur von 1350°C. Die Umdrehungszahl des Drehrohres betrug 3 Upm und die beheizte Zone wies eine Länge von 400 mm auf. Die Verweilzeit des Pulvers im Drehrohr betrug 10 Minuten. Es entstand ein poröses Agglomerat mit einem Durchmesserbereich von 2 bis 5 mm und einem durchschnittlichen Stickstoffgehalt von 6,7 ± 0,2 Gew.-%.

Die Phasenanalyse zeigte einen α-Gehalt von 90 %.

### Beispiel 4

Siliciumpulver mit einer Korngröße < 20 »m und einem Gehalt von 98,5 % Si wurde kontinuierlich einem Drehrohrofen zugeführt. Die Reaktionszone hatte eine Temperatur von 1400°C über eine Länge von 400 mm. Die Umdrehungsgeschwindigkeit des Rohres betrug 1,5 Upm, der Stickstoffpartialdruck 1,01x10⁵ Pa (1,01 bar). Die Verweilzeit des Produktes in der Reaktionszone betrug 45 Minuten. Das fertige Produkt war ein poröses Granulat, welches im Kornband von 0,5 bis 3 mm anfiel. Die Porosität betrug 45 %. Der Stickstoffgehalt betrug 39,2 Gew.-%.

Die Phasenanalyse zeigte einen Gehalt an der β-Modifikation von 70 %.

## Patentansprüche

1. Verfahren zur Herstellung von Siliciumnitrid durch Reaktion von Silicium und Stickstoff, indem man in einer ersten Reaktionsstufe Siliciumpulver mit Stickstoff unter ständigem Umwälzen bei 1000 bis 1800°C und 1,01-1,8 x 10⁵ Pa (1,01 bis 1,8 bar) bis zu einem Stickstoffgehalt von 5 bis 25 Gew.-% umsetzt und das teilazotierte Produkt in einer zweiten Reaktionsstufe bei 1100 bis 1600°C mit einem Gemisch aus Stickstoff und Inertgas wechselnder Zusammensetzung bis zur Beendigung der Stickstoffaufnahme reagieren läßt.

2. Verfahren nach Anspruch 1, dadurch gekennzeichnet, daß man die erste Reaktionsstufe in einem Drehrohr durchführt.

3. Verfahren nach den Ansprüchen 1 und 2, dadurch gekennzeichnet, daß man Siliciumpulver einer Korngröße < 500 »m, insbesondere mit einer Korngröße < 20 »m, verwendet.

4. Verfahren nach den Ansprüchen 1 bis 3, dadurch gekennzeichnet, daß man ein Siliciumpulver verwendet, dessen Gehalt an Si zwischen 95 und 99,8 %, vorzugsweise über 97,5 %, liegt.

5. Verfahren nach den Ansprüchen 1 bis 4, dadurch gekennzeichnet, daß die Verweilzeit des Siliciumpulvers in der ersten Reaktionsstufe 2 bis 60 Minuten beträgt.

6. Verfahren nach Anspruch 1, dadurch gekennzeichnet, daß man die zweite Reaktionsstufe in einem Kammerofen im Ruhebett durchführt.

7. Verfahren nach Anspruch 6, dadurch gekennzeichnet, daß man in der zweiten Reaktionsstufe als Reaktionsgas ein Gemisch von Stickstoff und Argon verwendet.

8. Verfahren nach Anspruch 7, dadurch gekennzeichnet, daß man den Stickstoffanteil im Reaktionsgas auf 30 bis 70 Vol.-% einstellt und entsprechend dem Reaktionsfortschritt bis auf 100 Vol.-% Stickstoff erhöht.

## Claims

1. Process for the production of silicon nitride by reaction of silicon and nitrogen, in which, in a first reaction step, one reacts silicon powder with nitrogen with continuous rolling round at 1000 to 1800°C and 1,01 - 1,8 x 10⁵ Pa (1,01 to 1.8 bar) up to a nitrogen content of 5 to 25 wt.% and allows the partly nitrogenised product to react in a second reaction stem at 1100 to 1600°C with a mixture of nitrogen and inert gas of varying composition until the ending of the nitrogen take-up.

2. Process according to claim 1, characterised in that one carries out the first reaction step in a rotating tube.

3. Process according to claims 1 and 2, characterised in that one uses a silicon powder with a grain size of < 500 »m, especially with a grain size of < 20 »m.

4. Process according to claims 1 to 3, characterised in that one uses a silicon powder, the content of Si of which lies between 95 and 99.8%, preferably above 97.5%.

5. Process according to claims 1 to 4, characterised in that the residence time of the silicon powder in the first reaction step amounts to 2 to 60 minutes.

6. Process according to claim 1, characterised in that one carries out the second reaction step in a chamber furnace in a stationary bed.

7. Process according to claim 6, characterised in that one uses a mixture of nitrogen and argon as reaction gas in the second reaction step.

8. Process according to claim 7, characterised in that one adjusts the proportion of nitrogen in the reaction gas to 30 to 70 vol.% and increases up to 100 vol.% of nitrogen according to the progress of the reaction.

## Revendications

1. Procédé de préparation de nitrure de silicium par réaction de silicium et d'azote, dans lequel on fait réagir dans une première étape réactionnelle de la poudre de silicium avec de l'azote dans des conditions de rotation continue, à une température de 1000 à 1800°C et sous une pression de 1,01-1,8 x 10⁵ Pa (1,01 à 1,8 bars) jusqu'à une teneur en azote de 5 à 25 % en masse, et on laisse réagir le produit partiellement azoté dans une seconde étape réactionnelle, à une température de 1100 à 1600°C, avec un mélange d'azote et de gaz inerte de composition variable jusqu'à la fin de l'absorption d'azote.

2. Procédé selon la revendication 1, caractérisé en ce que l'on effectue la première étape réactionnelle dans un tube rotatif.

3. Procédé selon les revendications 1 et 2, caractérisé en ce que l'on utilise une poudre de silicium ayant une grosseur de grains < 500 »m, en particulier une grosseur de grains < 20 »m.

4. Procédé selon les revendications 1 à 3, caractérisé en ce que l'on utilise une poudre de silicium dont la teneur en Si se situe entre 95 et 99,8 %, de préférence au-dessus de 97,5 %.

5. Procédé selon les revendications 1 à 4, caractérisé en ce que le temps de séjour de la poudre de silicium dans la première étape réactionnelle est compris entre 2 et 60 minutes.

6. Procédé selon la revendication 1, caractérisé en ce que l'on effectue la seconde étape réactionnelle dans un four à chambre, en lit fixe.

7. Procédé selon la revendication 6, caractérisé en ce que l'on utilise comme gaz de réaction dans la seconde étape réactionnelle un mélange d'azote et d'argon.

8. Procédé selon la revendication 7, caractérisé en ce que l'on ajuste la teneur en azote du gaz de réaction à une valeur comprise entre 30 et 70 % en volume, et on l'élève jusqu'à 100 % d'azote en volume en fonction du degré d'avancement de la réaction.
